# EUROPÄISCHE PATENTSCHRIFT

(11) **EP 3 374 317 B1**
(45) Veröffentlichungstag und Bekanntmachung des Hinweises auf die Patenterteilung: **24.07.2019**
(21) Anmeldenummer: 16808919.1
(22) Anmeldetag: 07.11.2016
(51) Int. Cl.: C02F 1/20, B01D 19/00

(54) **VERFAHREN ZUM ENTGASEN VON WASSER SOWIE ENTGASUNGSEINRICHTUNG**
METHOD FOR DEGASSING WATER, AND DEGASSING DEVICE
PROCÉDÉ DE DÉGAZAGE D'EAU ET DISPOSITIF DE DÉGAZAGE

(30) Priorität: 09.11.2015 DE 102015119237
(43) Veröffentlichungstag der Anmeldung: 19.09.2018
(73) Patentinhaber: corosys Prozeßsysteme und Sensoren GmbH, 65719 Hofheim am Taunus (DE)
(72) Erfinder: DITTRICH, Stephan, 65719 Hofheim am Taunus (DE)
(74) Vertreter: Kohlmann, Kai
(86) Internationale Anmeldenummer: PCT/EP2016/076826
(87) Internationale Veröffentlichungsnummer: WO 2017/080950

(56) Entgegenhaltungen:
- DE-A1-102009 055 178
- US-A- 2 792 904
- US-A- 4 609 385
- US-A- 5 584 914
- US-A1- 2012 118 154

## Beschreibung

Die Erfindung betrifft ein Verfahren zum Entgasen von gelösten Gasen, wie insbesondere Sauerstoff, Stickstoff, Kohlendioxid und andere gasförmige Substanzen, aus Wasser in einer Entgasungseinrichtung sowie eine Entgasungseinrichtung.

Entgasen bezeichnet die gesteuerte Entfernung von gelösten Gasen aus Flüssigkeiten und Festkörpern. Das selbstständige Entweichen von Gasen wird zumeist als Ausgasen bezeichnet.

Gelöste Gase im Wasser, wie Sauerstoff und Kohlendioxid, verursachen Korrosion in wasserführenden Teilen von Anlagen aus metallischen Werkstoffen. Gelöster Sauerstoff im Wasser kann in der Lebensmittelindustrie Lebensmittel durch Oxidation verderben. In verschiedenen Industriezweigen, insbesondere der Getränke-, Bauindustrie sowie der Energiewirtschaft wird daher Wasser mit einem Restsauerstoffgehalt von < 10ppb benötigt. Die Verwendung von Wasser mit einem niedrigen Sauerstoffgehalt erhöht die Haltbarkeit und Stabilität der Lebensmittel. Ein geringer Restsauerstoffgehalt reduziert zudem die Korrosion in wasserführenden Teilen, beispielsweise von Rohrleitungen, Dampferzeugern und Turbinenkreisläufen von Kraftwerken sowie Fernwärmenetzwerken.

Bekannte Verfahren zum Entfernen von gelösten Gasen aus Wasser basieren darauf, dass ein sogenanntes Strippgas das zu entgasende Wasser in Gegenstrom durchströmt. Beim Entgasen werden gelöste Gase, aus dem Wasser entfernt. Sauerstoff und Kohlendioxid werden vom Wasser in gewissen Mengen aufgenommen. Nach dem Henry-Gesetz ist die Menge der gelösten Gaspartikel proportional zu dem Partialdruck in der Gasphase des Strippgases. Indem das Strippgas weniger von dem aus dem Wasser zu entfernenden Gas enthält als das zu entgasende Wasser wird das Gleichgewicht gestört und die Menge der gelösten Gaspartikel in dem Wasser nimmt nach dem Henry-Gesetz ab. Zudem nimmt die Löslichkeit von Gasen in Wasser mit steigender Temperatur ab.

Aus Corosys Prozeßsysteme und Sensoren GmbH. Entgasen von Flüssigkeiten [abgerufen am 03.11.2015] Abgerufen aus dem Internet: <URL:
www.corosys.com/produkte/entgasung/uebersicht-entgasung/> sind Verfahren zum Entgasen von gelöstem Sauerstoff aus Wasser bekannt, mit denen sich Restsauerstoffwerte bis unter 10ppb erreichen lassen. Zum Entgasen von gelöstem Sauerstoff aus Wasser wird das Wasser am Kopf einer Kolonne auf eine strukturierte Packung aufgebracht und rieselt in der Kolonne nach unten. An der Unterseite wird der Kolonne reines Kohlendioxid CO₂ oder reiner Stickstoff N₂ als Strippgas zugeführt. Das Strippgas steigt im Gegenstrom in der Kolonne nach oben, sättigt das Wasser mit Kohlendioxid beziehungsweise Stickstoff und strippt gleichzeitig den im Wasser gelösten Sauerstoff. Das Verfahren kann kalt unter Umgebungsdruck, heiß unter Umgebungsdruck oder in einer geschlossenen Kolonne unter Vakuum durchgeführt werden.

Aus Wikipedia, der freien Enzyklopädie, Speisewasser[abgerufen am 04.11.2015], abgerufen aus dem Internet: < URL: https://.de.wikipedia.org/wiki/Speisewasser> ein Verfahren zur thermischen Entgasung von Speisewasser offenbart. Speisewasser ist in einem Speisewasserbehälter vorgehaltenes Wasser, das kontinuierlich einem Dampferzeuger zugeführt wird. Große Mengen von Speisewasser werden in Dampfkraftwerken benötigt. Zur Entgasung wird der Speisewasserbehälter durch eine Dampflanze im Wasserraum zur Durchmischung der Flüssigkeit und durch Zugabe von Dampf im Gasraum beheizt. An der Oberseite des liegenden Speisewasserbehälters ist ein Entgaserdom angeordnet. Das Wasser wird auf ein oberes Verteilerblech geleitet und läuft über Rieselbleche in den Speisewasserbehälter. Im Gegenstrom strömt Dampf zum Kopf des Entgasers und erwärmt das eingeleitete Wasser. Dabei werden die gebundenen Gase freigesetzt und steigen mit dem Dampf nach oben, der am Kopf des Entgasers entweicht. Für die Entgasung wird bei der thermischen Entgasung der Umstand genutzt, dass mit zunehmender Temperatur die Löslichkeit von Gasen in Flüssigkeiten sinkt.

Die US 5 584 914 A offenbart eine Membran-Entgasungseinrichtung zum Entfernen von gelösten Gasen aus Wasser mit einem ersten und einem zweiten Entgasungsbehälter enthaltend eine Vielzahl von hydrophoben Hohlfasermembranen. In dem ersten Entgasungsbehälter herrscht ein Unterdruck von höchstens 13,3 mbar und in dem zweiten Entgasungsbehälter von höchstens 1,3 mbar. Das zu entgasende Wasser durchströmt die Hohlfasermembranen. Aufgrund des in den Entgasungsbehältern herrschenden Unterdrucks diffundiert das zu entfernende Gas aus dem Wasser durch die Hohlfasermembranen und wird anschließend durch an die Entgasungsbehälter angeschlossene Vakuumpumpen evakuiert.

Die DE 10 2009 055 178 A1 offenbart eine Vorrichtung und ein Verfahren zum Entfernen flüchtiger gelöster Stoffe aus Grundwasser durch anoxisches Vakuumstrippen. Die Vorrichtung umfasst mehrere in Strömungsrichtung des Wassers in Reihe geschaltete Vernebelungskolonnen, die frei von festen Einbauten und Füllkörpern mit einem Kolonnenkopf und einem Kolonnenboden versehen sind. Am Kolonnenkopf jeder Kolonne ist ein Trägergasverdüsungsmodul angeordnet, mit dem das Grundwasser mit dem Trägergas innerhalb der Kolonne vernebelt wird. An dem Kolonnenkopf jeder Kolonne ist außerdem die Saugseite eines gemeinsamen Unterdruckerzeugers angeschlossen. Der Unterdruckerzeuger saugt am Kolonnenkopf jeder Vernebelungskolonne ein Gemisch aus dem Trägergas und den im Trägergas befindlichen Schadstoffen aus dem Grundwasser an.

Die US 2012/118154 A1 offenbart eine zweistufige Entgasungseinrichtung zum Entgasen von Sauerstoff aus Seewasser umfassend einen ersten Entgasungsbehälter mit Einbauten, einen oberhalb der Behältereinbauten angeordneten ersten Einlass zum Einbringen des Seewassers in den ersten Entgasungsbehälter, einen bodenseitigen ersten Auslass zum Ausleiten des teilweise entgasten Seewassers aus dem ersten Entgasungsbehälter in einen zweiten Entgasungsbehälter, ein oberhalb der Behältereinbauten des zweiten Entgasungsbehälters angeordneten zweiten Einlass, eingerichtet zum Einbringen des teilweise entgasten Wassers in den zweiten Entgasungsbehälter, einen bodenseitig an dem zweiten Entgasungsbehälter angeordneten Auslass zum Ausleiten des entgasten Wassers aus dem zweiten Entgasungsbehälter und eine gasdichte, jedoch flüssigkeitsleitende Verbindung zwischen dem ersten Auslass und dem zweiten Einlass. Vor Einleitung des zu entgasenden Seewassers in den ersten Entgasungsbehälter wird dies in einer Heizvorrichtung ausgeheizt und anschließend mit einem Strippgas in einem Mischer vermischt. Das teilentgaste Seewasser wird vor Einleitung in den zweiten Entgasungsbehälter in einem Mischer ebenfalls mit Strippgas gemischt. Das entgaste Wasser wird aus beiden Entgasungsbehältern jeweils an der Unterseite abgeführt, während der Gasstrom mit dem Strippgas und dem entfernten Sauerstoff über eine an die Oberseite der Entgasungsbehälter angeschlossene Leitung entlüftet wird. Die an den zweiten Entgasungsbehälter angeschlossene Leitung ist zusätzlich mit einer Vakuumpumpe verbunden, die in dem zweiten Entgasungsbehälter einen Unterdruck aufrecht erhält und den Gasstrom zu der Entlüftung fördert.

Ein wesentlicher Nachteil der bekannten Entgasungsverfahren besteht darin, dass das Strippgas, sei es Kohlendioxid, Stickstoff oder Dampf, bereitgestellt werden muss. Hinzu kommt, dass das in der Getränkeindustrie vielfach eingesetzte CO₂ als Treibhausgas qualifiziert wird. Darüber hinaus ist Kohlendioxid in verschiedenen Märkten sehr kostspielig. Dampf als Strippgas ist ebenfalls teuer und die durch Einleitung von Dampf als Strippgas erfolgende Erwärmung des zu entgasenden Wassers ist vielfach prozesstechnisch nicht sinnvoll oder unerwünscht. Für den Einsatz von Stickstoff als Strippgas bedarf es Investitionen in Stickstofftanks oder in Stickstoffgeneratoren. Stickstoffgeneratoren verbrauchen mehr elektrische Energie als die Entgasung selbst.

Ausgehend von diesem Stand der Technik liegt der Erfindung die Aufgabe zugrunde, ein Entgasungsverfahren für Wasser zu schaffen, das energetisch vorteilhaft ist und bei dem kein Strippgas bereitgestellt werden muss. Insbesondere soll durch das Verfahren eine Erwärmung des zu entgasenden Wassers vermieden werden. Außerdem soll eine Entgasungseinrichtung vorgeschlagen werden.

Diese Aufgabe wird durch ein Verfahren mit den Merkmalen des Anspruchs 1 sowie eine Entgasungseinrichtung mit den Merkmalen des Anspruchs 6 gelöst.

Die Entgasung erfolgt in zwei Stufen in einem geschlossenen System mit einem ersten und einem zweiten Entgasungsbehälter. Beide Behälter arbeiten als Durchlaufentgaser, wobei Behältereinbauten in beiden Behältern die flüssige Phase und eine gasförmige Phase in dem Behälter mit einer ausreichenden Oberfläche zwischen der flüssigen und gasförmigen Phase und hinreichender Verweildauer in Kontakt bringen.

In dem ersten Behälter findet eine Vakuumentgasung des durchlaufenden Wassers statt, wobei in dem Behälter von einer Unterdruckerzeugungseinrichtung ein Unterdruck knapp über dem gegebenen Dampfdruck P1 des eingeleiteten Wassers erzeugt wird. Der Dampfdruck P1 des eingeleiteten Wassers hängt von der Wassertemperatur T1 des eingebrachten Wassers ab. Wird das Wasser beispielsweise bei einer Umgebungstemperatur von T1 = 19° in den ersten Entgasungsbehälter eingeleitet, beträgt der Dampfdruck P1 = 22 Millibar. Der in dem ersten Entgasungsbehälter herrschende Unterdruck ist lediglich geringfügig, vorzugsweise maximal ein Millibar, höher als der gegebene Dampfdruck P1. Der Unterdruck wird hierzu derart bestimmt, dass der überwiegende Teil des gelösten Sauerstoffs, vorzugsweise mindestens 90% des gelösten Sauerstoffs, aus dem Wasser entgast. Für das Ausführungsbeispiel bedeutet dies, dass bei 19° warmen Wasser ein Unterdruck oberhalb von 22 mbar jedoch von maximal 23 mbar in dem ersten Entgasungsbehälter erzeugt wird.

Nach dem Henry-Gesetz ist der Partialdruck des Gases über einer Flüssigkeit direkt proportional zur Konzentration des Gases in der Flüssigkeit. Das Evakuieren des ersten Entgasungsbehälters auf einen Unterdruck knapp über dem Dampfdruck P1 des eingebrachten Wassers bewirkt ein starkes Abfallen des Partialdrucks der Gasbestandteile der in dem Behälter eingeschlossenen Luft und damit der Gaskonzentration in dem Wasser. Infolgedessen werden insbesondere auch der gelöste Sauerstoff und der gelöste Stickstoff aus dem Wasser entfernt. Aufgrund der Temperaturabhängigkeit der Henry-Konstante kann durch Erwärmung des zugeführten Wassers die Entgasungsqualität verbessert werden.

Die aus dem Wasser in dem Vakuum entfernten Gasbestandteile werden mittels der Unterdruckerzeugungseinrichtung abgesaugt.

Das durch den ersten Entgasungsbehälter hindurch geleitete Wasser sammelt sich am Boden des ersten Behälters. Das teilweise, vorzugsweise zu mindestens 90% entgaste Wasser, wird kontinuierlich aus dem ersten Entgasungsbehälter ausgeleitet und in den zweiten Entgasungsbehälter eingebracht. In dem zweiten Entgasungsbehälter erzeugt die Unterdruckerzeugungseinrichtung einen Unterdruck unter dem gegebenen Dampfdruck P2 des in den zweiten Entgasungsbehälter eingeleiteten Wassers. Der Dampfdruck P2 des eingeleiteten Wassers hängt von der Wassertemperatur T2 des in den zweiten Entgasungsbehälters eingebrachten, teilweise entgasten Wassers ab, die, sofern keine Zwischenerwärmung des Wasser in dem Prozess vorgesehen ist, im wesentlichen mit der Temperatur T1 bei Einleitung in den ersten Entgasungsbehälter übereinstimmt.

Zur Erzeugung des Unterdrucks wird an den zweiten Unterdruckbehälter eine Unterdruckerzeugungseinrichtung angeschlossen, die zur Erzeugung eines absoluten Unterdrucks an der Saugseite der Vakuumpumpe von vorzugsweise unter 0,01 mbar eingerichtet ist. Durch die Absenkung des Unterdrucks in dem zweiten Entgasungsbehälter auf einen Wert unter den Dampfdruck P2 des eingeleiteten Wassers beginnt das eingeleitete Wasser zu verdampfen. Die Menge des von dem Wasser freigesetzten Dampfes entspricht der Saugleistung der Unterdruckerzeugungseinrichtung, die den Unterdruck erzeugt und den Dampf aus dem zweiten Entgasungsraum absaugt. Der Partialdruck der Gase in dem Dampf ist geringer als der Partialdruck der gelösten Gase in dem Wasser. Infolgedessen diffundieren die gelösten Gase aus dem Wasser in den Dampf. Der Ausgleich der Partialdrucke der im Wasser gelösten Gase und der entsprechenden Gase im Dampf beruht auf dem Henry-Gesetz. Durch die Verdampfung des Wassers sinkt die Temperatur des Wassers geringfügig ab. Aufgrund der sinkenden Temperatur stellt sich ein etwas niedrigerer Dampfdruck des Wassers als bei dessen Einleitung ein. Dieser Abfall des Dampfdrucks ist bei der Auslegung der Unterdruckerzeugungseinrichtung zu berücksichtigen, damit die Unterdruckerzeugungseinrichtung stets einen Unterdruck unterhalb des Dampfdrucks P2 derart erzeugt, dass die Verdampfung aufrechterhalten werden kann.

Das weitgehend entgaste Wasser sammelt sich am Behältersumpf des zweiten Entgasungsbehälters und wird dort ausgeleitet.Der gemäß dem erfindungsgemäßen Verfahren in dem zweiten Entgasungsbehälter erzeugte Dampf wirkt ähnlich, wie die im bisherigen Stand der Technik eingesetzten Strippgase. Da die Dampferzeugung unmittelbar mit dem Eintritt des Wassers in den zweiten Entgasungsbehälter beginnt, wird der Dampf im Gleichstrom mit dem Wasser durch den zweiten Entgasungsbehälter hindurch geleitet. Hierdurch wird die Kontaktdauer zwischen dem Dampf und dem zu entgasenden Wasser erhöht.

In dem zweistufigen erfindungsgemäßen Verfahren erfolgt sowohl die Entgasung des gelösten Sauerstoffs aus dem Wasser in dem ersten Entgasungsbehälter als auch die teilweise Verdampfung des Wassers in dem zweiten Entgasungsbehälter ausschließlich durch das Erzeugen eines Unterdrucks. Insbesondere ist keine Zufuhr von Wärme in dem ersten und zweiten Entgasungsbehälter vorgesehen und erforderlich. Hierdurch ergibt sich insbesondere im Zusammenhang mit dem im ersten Entgasungsbehälter herrschenden höheren Drucks ein energetisch vorteilhaftes Verfahren.

Um die unterschiedlichen Unterdrücke in dem ersten und zweiten Entgasungsbehälter während der zweistufigen Entgasung aufrecht erhalten zu können, weist die Entgasungseinrichtung eine gasdichte, jedoch flüssigkeitsleitende Verbindung zwischen dem ersten Auslass in dem ersten Entgasungsbehälter und dem zweiten Einlass in dem zweiten Entgasungsbehälter auf. Bei der gasdichten, flüssigkeitsleitenden Verbindung handelt es sich insbesondere um einen in der Verfahrenstechnik üblichen Siphon. Die Sperrwasserhöhe des Siphons wird derart bestimmt, dass der Differenzdruck zwischen dem ersten Unterdruckbehälter und dem zweiten Unterdruckbehälter nicht ausreicht, um den Siphon zu überwinden. Alternativ kann eine gasdichte Verbindung zwischen den beiden Behältern durch eine Rohrleitung mit einer Förderpumpe hergestellt werden.

Um die Oberfläche zwischen dem zu entgasenden Wasser und der umgebenden gasförmigen Phase zu vergrößern, umfassen die ersten und zweiten Behältereinbauten in vorteilhafter Ausgestaltung der Erfindung Flüssigkeitsverteiler. Die Flüssigkeitsverteiler sind vorzugsweise unmittelbar unter dem Einlass des ersten und/oder zweiten Entgasungsbehälters angeordnet. Bei den Flüssigkeitsverteilern kann es sich um eine Einrichtung zur Verdüsung, Zerstäubung oder Verrieselung des Wassers innerhalb der Behälter handeln.

Um die Verweildauer des Wassers beim Durchlauf durch den ersten und/oder zweiten Behälter zu verlängern, umfassen die ersten und zweiten Behältereinbauten vorzugsweise strukturierte Packungen. Eine strukturierte Packung besteht üblicherweise aus dünnen, gewellten und gelochten Metallplatten beziehungsweise Drahtnetzen. Das Design derartiger strukturierter Packungen soll einen optimalen Gasaustausch zwischen der flüssigen Phase und der Gasphase bei minimalem Druckwiderstand gewährleisten.

Die Unterdruckerzeugungseinrichtung zur Erzeugung der unterschiedlichen Unterdrücke in dem ersten Entgasungsbehälter und dem zweiten Entgasungsbehälter weist in einer erster Ausführungsform der Erfindung lediglich eine Vakuumpumpe auf, deren Saugseite mit dem Innenraum des ersten und zweiten Behälters fluidleitend verbunden ist. Um in dem ersten Entgasungsbehälter den Unterdruck weniger stark abzusenken als in dem zweiten Entgasungsbehälter weist die fluidleitende Verbindung zu dem ersten Entgasungsbehälter eine Drossel auf. Bei der Drossel handelt es sich beispielsweise um ein Drosselventil oder eine Blende.

Alternativ, insbesondere für Entgasungsanlagen mit hohem Durchsatzvolumen, kann die Unterdruckerzeugungseinrichtung eine erste und eine zweite Vakuumpumpe aufweisen, wobei die Saugseite der ersten Vakuumpumpe mit dem Innenraum des ersten Entgasungsbehälters fluidleitend verbunden ist und die Saugseite der zweiten Vakuumpumpe mit dem Innenraum des zweiten Entgasungsbehälters fluidleitend verbunden ist.

Um den Dampf im Gleichstrom mit dem Wasser durch den zweiten Entgasungsbehälter hindurch zuleiten, ist die Saugseite der Unterdruckerzeugungseinrichtung unterhalb der zweiten Behältereinbauten, jedoch oberhalb des sich am Boden des Behälters sammelnden Wasserspiegels fluidleitend mit dem Innenraum des Behälters verbunden. Um ein Ansaugen von Wassertropfen aus dem zweiten Entgasungsbehälter zu verhindern, ist die Saugseite vorzugsweise an einen Rohrstutzen angeschlossen, der sich in Richtung des Behälterbodens erstreckt. In dem ersten Entgasungsbehälter ist die Saugseite aus diesem Grund vorzugsweise an die Oberseite des Entgasungsbehälters angeschlossen.

Anlagentechnisch vorteilhaft sind der erste und zweite Entgasungsbehälter vorzugsweise als Bestandteile einer zweistufigen Kolonne ausgeführt. Eine Trennwand in der hohlen, schlanken Säule unterteilt die Kolonne in den ersten und zweiten Entgasungsbehälter, wobei der erste Entgasungsbehälter oberhalb des zweiten Entgasungsbehälters angeordnet ist. Der Auslass des ersten Entgasungsbehälters ist bodennah angeordnet und über den Siphon mit dem Einlass in dem zweiten Entgasungsbehälter verbunden, der sich knapp unterhalb der Trennwand in der Mantelfläche der Kolonne befindet.

Die Trennwand weist mindestens einen, vorzugsweise jedoch eine Vielzahl, beispielsweise 50 - 60 Durchgänge auf. Die Trennwand kann beispielsweise als Lochblech mit 50 - 60 Durchgängen und einer Stärke von etwa 10 mm ausgebildet sein. Jeder Durchgang weist eine in dem ersten Entgasungsbehälter mündende Eintrittsöffnung und eine in dem zweiten Entgasungsbehälter mündende Austrittsöffnung auf.

Die Eintrittsöffnung jedes Durchgangs bildet zugleich einen der ersten Auslässe aus dem ersten Entgasungsbehälter und die Austrittsöffnung jedes Durchgangs zugleich einen der zweiten Einlässe in den zweiten Entgasungsbehälter aus. Der Durchmesser des Durchgangs bzw. der Durchgänge ist derart dimensioniert, dass eine gasdichte, jedoch flüssigkeitsleitende Verbindung zwischen jedem ersten Auslass und jedem zweiten Einlass geschaffen wird. Im Entgasungsbetrieb muss sich oberhalb der Trennwand in dem ersten Entgasungsbehälter stets genügend Wasser sammeln, so dass die Querschnitte des Durchgangs bzw. der Durchgänge stets mit Wasser gefüllt sind und dadurch die gasdichte, jedoch flüssigkeitsleitende Verbindung herstellen. Bei einem Lochblech mit 50 - 60 Durchgängen und einer Stärke von 10 mm weisen die einzelnen Durchgänge beispielsweise einen Durchmesser von etwa 10 mm auf.

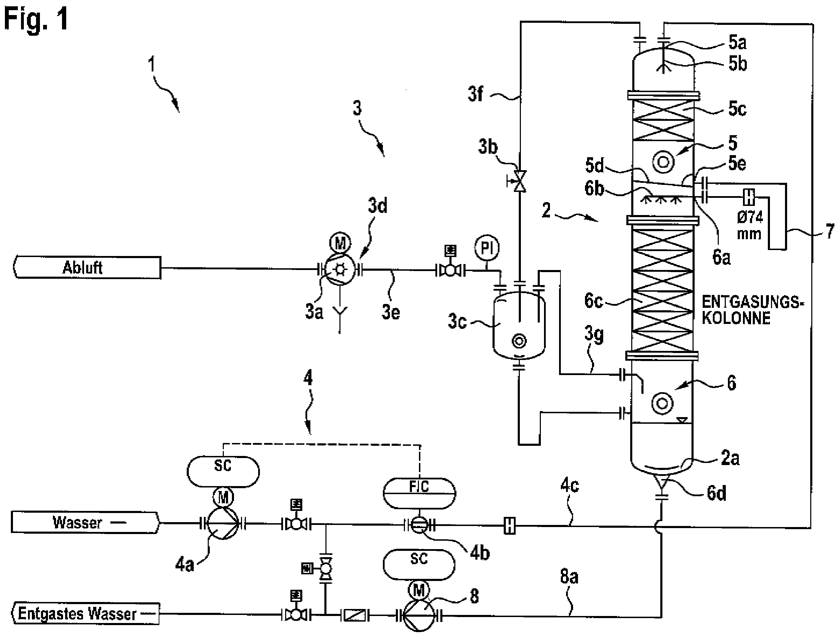

Nachfolgend wird die Erfindung anhand eines Ausführungsbeispiels näher erläutert. Es zeigen
- **Figur 1:**: eine schematische Darstellung einer Entgasungseinrichtung zur Durchführung des Entgasungsverfahrens.

Die Entgasungseinrichtung (1) zum Entgasen von gelösten Gasen, insbesondere Sauerstoff und Stickstoff und Kohlenstoffdioxid, aus Wasser umfasst als wesentliche Bestandteile eine Kolonne (2) mit einem ersten und einem zweiten Entgasungsbehälter (5, 6) sowie eine Unterdruckerzeugungseinrichtung (3), die als wesentliche Bestandteile eine Vakuumpumpe (3a), eine Drossel (3b) sowie ferner einen Flüssigkeitsabscheider (3c) aufweist.

Das zu entgasende Wasser wird über eine Verrohrung (4c) mithilfe einer Pumpenanordnung (4) umfassend eine Kreiselpumpe (4a) und einen Durchflussmesser (4b) mengengeregelt mit konstantem Massestrom am Kopf der Kolonne (2) über einen ersten Einlass (5a) in den ersten Entgasungsbehälter (5) eingebracht.

An den Einlass (5a) ist ein Flüssigkeitsverteiler (5b) in Form einer Verrieselungseinrichtung angeschlossen, die das in der Oberfläche vergrößerte Wasser gleichmäßig über die unterhalb des Flüssigkeitsverteilers (5b) angeordnete strukturierte Packung (5c) verteilt, durch die das verrieselte Wasser in Richtung des geneigten Behälterbodens (5d) hindurch läuft. Der Behälterboden (5d) ist in Richtung des bodenseitigen ersten Auslasses (5e) geneigt.

Der Auslass (5e) ist mit dem zweiten Einlass (6a) des zweiten Entgasungsbehälters (6) über einen Siphon (7) verbunden, der als Gasverschluss zwischen dem ersten und zweiten Entgasungsbehälter (5,6) arbeitet.

An den Einlass (6a) in dem zweiten Entgasungsbehälter (6) ist ebenfalls ein Flüssigkeitsverteiler (6b) oberhalb einer strukturierten Packung (6c) angeordnet, durch die das Wasser in Richtung eines Kolonnensumpfes (2a) hindurch geleitet wird. In dem Kolonnensumpf (2a) ist der zweite Auslass (6d) des zweiten Entgasungsbehälters (6) angeordnet, der über eine Verrohrung (8a) mit einer Kreiselpumpe (8) zur kontinuierlichen Ausleitung des nahezu vollständig entgasten Wassers verbunden ist.

Die Saugseite (3d) der Vakuumpumpe (3a) ist an der Oberseite des als geschlossener Behälter ausgeführten Flüssigkeitsabscheiders (3c) über eine Verrohrung (3e) angeschlossen. An der Oberseite des Flüssigkeitsabscheiders ist darüber hinaus eine Verrohrung (3f) und eine Verrohrung (3g) angeschlossen, die die Saugseite (3d) der Vakuumpumpe (3a) mit dem Gasraum in dem ersten Entgasungsbehälter (5) und dem zweiten Entgasungsbehälter (6) verbindet. In der Verrohrung (3f) befindet sich die Drossel (3b). Die Drossel (3b) wird derart eingestellt, dass die ungeregelt an der Saugseite (3d) einen absoluten Unterdruck von 0,01 mbar erzeugende Vakuumpumpe (3a) in dem ersten Entgasungsbehälter (5) einen Unterdruck knapp über dem Dampfdruck P1 des über den Einlass (5a) eingebrachten Wassers erzeugt.

Abweichend hierzu wird in dem zweiten Entgasungsbehälter der volle, an der Saugseite (3d) der Vakuumpumpe (3a) wirksame Unterdruck über die Verrohrung (3g) ungedrosselt in dem zweiten Entgasungsbehälter zur Wirkung gebracht. Hierdurch wird in dem zweiten Entgasungsbehälter (6) ein Unterdruck unter dem Dampfdruck P2 des teilweise entgasten und über den Einlass (6a) zugeführten Wassers erzeugt. Unter der Annahme, dass das Wasser beim Durchlauf durch den ersten Entgasungsbehälter seine Temperatur von beispielsweise T1 = 19° C beibehält, beträgt der Dampfdruck P2 des in den zweiten Entgasungsbehälter eingeleiteten Wassers bei einer Temperatur T2 = 19° Celsius P2 = 22 mbar. Die Vakuumpumpe (3a) muss so ausgelegt sein, dass ein Unterdruck von unter 22 mbar innerhalb des zweiten Entgasungsbehälters (6) während der Entgasung derart aufrecht erhalten werden kann, dass die Verdampfung nicht zum Erliegen kommt. Bei der Auslegung ist zu berücksichtigen, dass die Temperatur T2 und der Dampfdruck P2 bei der Einleitung des Wassers in den Behälter durch die Verdampfung geringfügig absinkt. In dem Ausführungsbeispiel mit einer Unterdruckerzeugungseinrichtung mit einer Saugleistung von 200 m³/ h aus dem zweiten Behälter und einem Volumenstrom des in den ersten Behälter eingleiteten Wassers von 20 m³ / h sinkt T2 = 19° C etwa um 0,1 ° C und der Dampfdruck P2 = 22 mbar fällt um 0,14 mbar ab. Dieser geringe Druckabfall ist dahingehend zu berücksichtigen, dass der in dem zweiten Behälter herrschende, durch die Unterdruckerzeugungseinrichtung erzeugte Unterdruck nicht höher als der durch den Druckabfall um 0,14 mbar reduzierte Dampfdruck P2 ist. Durch den derart unterhalb von P2 erzeugten Unterdruck verdampft das das durchlaufende Wasser fortlaufend, wobei die Vakuumpumpe (3a) eine ihrer Saugleistung entsprechende Dampfmenge pro Zeiteinheit entfernt. Der Volumenstrom des Dampfes wird durch die Saugleistung der Vakuumpumpe (3a) bestimmt. Dabei hängt die Wirksamkeit der Entgasung auch von der Temperatur T2 des Wassers in dem zweiten Entgasungsbehälter (6) ab, sodass eine Vorwärmung des eingeleiteten Wassers von Vorteil sein kann. Bei wärmerem Wasser stellt sich ein höherer Dampfdruck ein. Bei gleicher Saugleistung der Vakuumpumpe, enthält das Wasserdampfvolumen mehr Masse. Je größer der Massestrom des Wasserdampfes ist, desto geringer ist sein Anteil an gelösten Gasen, insbesondere Sauerstoff. Je geringer der Sauerstoffanteil im Wasserdampf ist, desto weniger Sauerstoff verbleibt in dem zu entgasendem Wasser. Im Ergebnis muss daher bei kälterem Wasser die Saugleistung der Vakuumpumpe (3a) höher als bei wärmeren zugeführten Wasser sein, um eine übereinstimmende Entgasung in der zweiten Stufe der Entgasungseinrichtung bei ansonsten übereinstimmenden Verfahrensparametern zu gewährleisten.

Das weitgehend entgaste Wasser wird über den Auslass (6d) über die Verrohrung (8a) mithilfe der Kreiselpumpe (8) kontinuierlich aus der Entgasungsrichtung (1) ausgeleitet.

| **Nr.** | **Bezeichnung** |
|---|---|
| 1. | Entgasungseinrichtung |
| 2. | Kolonne |
| 2a. | Kolonnensumpf |
| 3. | Unterdruckerzeugungseinrichtung |
| 3a. | Vakuumpumpe |
| 3b. | Drossel |
| 3c. | Flüssigkeitsabscheider |
| 3d. | Saugseite |
| 3e. | Verrohrung |
| 3f. | Verrohrung |
| 3g. | Verrohrung |
| 4. | Pumpenanordnung |
| 4a. | Kreiselpumpe |
| 4b. | Durchflussmesser |
| 4c. | Verrohrung |
| 5. | Erster Entgasungsbehälter |
| 5a. | Einlass |
| 5b. | Flüssigkeitsverteiler |
| 5c. | Strukturierte Packung |
| 5d. | Behälterboden |
| 5e. | Auslass |
| 6. | Zweiter Entgasungsbehälter |
| 6a. | Einlass |
| 6b. | Flüssigkeitsverteiler |
| 6c. | Strukturierte Packung |
| 6d. | Auslass |
| 7. | Siphon |
| 8. | Kreiselpumpe |
| 8a. | Verrohrung |

## Patentansprüche

1. Verfahren zum Entfernen von gelösten Gasen umfassend Sauerstoff und Stickstoff aus Wasser in einer Entgasungseinrichtung (1) mit
- einem ersten und einem zweiten geschlossenen Entgasungsbehälter (5, 6), die jeweils erste und zweite Behältereinbauten aufweisen, um eine flüssige Phase und eine gasförmige Phase in Kontakt zu bringen und
- einer Unterdruckerzeugungseinrichtung (3), die zur Erzeugung unterschiedlich hoher Unterdrücke in Bezug auf den Umgebungsdruck in dem ersten und zweiten Entgasungsbehälter (5, 6) eingerichet ist, wobei eine Saugseite (3d) der Unterdruckerzeugungseinrichtung unterhalb der zweiten Behältereinbauten in dem zweiten Entgasungsbehälter (6), jedoch oberhalb des sich am Boden des zweiten Entgasungsbeehälters sammelnden Wasserspiegels fluidleitend mit dem Innenraum des Entgasungsbehälters (6) verbunden ist, umfassend die Schritte:
- kontinuierliches Einbringen des Wasser in den ersten Entgasungsbehälter (5) mit einer Wassertemperatur T1 und einem bei der Wassertemperatur T1 gegebenen Dampfdruck P1,
- Hindurchleiten des Wassers durch den ersten Entgasungsbehälter (5),
- Erzeugen eines Unterdrucks in dem ersten Entgasungsbehälter (5) über dem gegebenen Dampfdruck P1 derart, dass zumindest der überwiegende Teil des gelösten Sauerstoffs aus dem Wasser entgast,
- kontinuierliches Ausleiten des teilweise entgasten Wassers aus dem ersten Entgasungsbehälter (5),
- kontinuierliches Einbringen des ausgeleiteten und teilweise entgasten Wassers in den zweiten Entgasungsbehälter (6) mit einer Wassertemperatur T2 und einem bei der Wassertemperatur T2 gegebenen Dampfdruck P2,
- Hindurchleiten des teilweise entgasten Wassers durch den zweiten Entgasungsbehälter (6),
- Erzeugen eines Unterdrucks in dem zweiten Entgasungsbehälter (6) unter dem gegebenen Dampfdruck P2 derart, dass das Wasser teilweise verdampft,
- Hindurchleiten des Dampfs im Gleichstrom mit dem Wasser durch den zweiten Entgasungsbehälter (6),
- Absaugen des Dampfs aus dem zweiten Entgasungsbehälter (6) mit der Unterdruckerzeugungseinrichtung (3),
- Ausleiten des entgasten Wassers aus dem zweiten Entgasungsbehälter (6).

2. Verfahren nach Anspruch 1, **dadurch gekennzeichnet, dass** der Unterdruck in dem ersten Entgasungsbehälter (5) über dem gegebenen Dampfdruck P1 derart erzeugt wird, dass mindestens 90 % des gelösten Sauerstoffs aus dem Wasser entgast.

3. Verfahren nach Anspruch 1 oder 2, **dadurch gekennzeichnet, dass** der Unterdruck in dem ersten Entgasungsbehälter (5) maximal 1 mbar höher als der gegebene Dampfdruck P1 ist.

4. Verfahren nach einem der Ansprüche 1 bis 3, **dadurch gekennzeichnet, dass** die Unterdruckerzeugungseinrichtung (3) den Unterdruck ungeregelt erzeugt, wobei die Unterdruckerzeugungseinrichtung (3) zur Erzeugung eines absoluten Unterdrucks unter dem in dem zweiten Entgasungsbehälter (6) herrschenden Unterdruck eingerichtet ist.

5. Verfahren nach einem der Ansprüche 1 bis 4, **dadurch gekennzeichnet, dass** die Unterdruckerzeugungseinrichtung (3) den Unterdruck ungeregelt erzeugt, wobei die Unterdruckerzeugungseinrichtung (3) zur Erzeugung eines absoluten Unterdrucks von unter 0,01 mbar eingerichtet ist.

6. Entgasungseinrichtung (1) zum Entgasen von gelösten Gasen aus Wasser umfassend
- einen ersten geschlossenen Entgasungsbehälter (5) mit ersten Behältereinbauten eingerichtet um eine flüssige Phase und eine gasförmige Phase in Kontakt zu bringen,
- einem oberhalb der Behältereinbauten angeordneten ersten Einlass (5a) eingerichtet zum kontinuierlichen Einbringen des Wasser in den ersten Entgasungsbehälter (5),
- einen bodenseitigen ersten Auslass (5e) eingerichtet zum kontinuierlichen Ausleiten des teilweise entgasten Wassers aus dem ersten Entgasungsbehälter (5),
- einen zweiten geschlossenen Entgasungsbehälter (6) mit zweiten Behältereinbauten eingerichtet um eine flüssige Phase und eine gasförmige Phase in Kontakt zu bringen,
- einen oberhalb der Behältereinbauten angeordneten zweiten Einlass (6a) eingerichtet zum kontinuierlichen Einbringen des teilweise entgasten Wassers in den zweiten Entgasungsbehälter (6),
- einen unterhalb der Behältereinbauten angeordneten zweiten Auslass (6d) eingerichtet zum kontinuierlichen Ausleiten des teilweise entgasten Wassers aus dem zweiten Entgasungsbehälter (6),
- eine gasdichte, jedoch flüssigkeitsleitende Verbindung zwischen dem ersten Auslass (5e) und dem zweiten Einlass (6a),
- eine Unterdruckerzeugungseinrichtung (3), die zur Erzeugung unterschiedlicher Unterdrücke in Bezug auf den Umgebungsdruck in dem ersten und zweiten Entgasungsbehälter (5, 6) derart eingerichet ist, dass in dem ersten Entgasungsbehälter (5) ein Unterdruck über dem Dampfdruck P1 des eingebrachten Wassers und in dem zweiten Entgasungsbehälter ein Unterdruck unter dem Dampfdruck P2 des teilweise entgasten Wassers erzeugt werden kann,
- wobei eine Saugseite (3d) der Unterdruckerzeugungseinrichtung unterhalb der zweiten Behältereinbauten in dem zweiten Entgasungsbehälter (6), jedoch oberhalb des sich am Boden des zweiten Entgasungsbeehälters sammelnden Wasserspiegels fluidleitend mit dem Innenraum des Entgasungsbehälters (6) verbunden ist.

7. Entgasungseinrichtung nach Anspruch 6, **dadurch gekennzeichnet, dass** die Unterdruckerzeugungseinrichtung (3) eine Vakuumpumpe (3a) aufweist, deren Saugseite (3d) mit dem Innenraum des ersten und zweiten Behälters (5, 6) fluidleitend verbunden ist, wobei die fluidleitende Verbindung zu dem ersten Entgasungsbehälter (5) eine Drossel (3b) aufweist.

8. Entgasungseinrichtung nach Anspruch 6, **dadurch gekennzeichnet, dass**
- die Unterdruckerzeugungseinrichtung (3) eine erste Vakuumpumpe aufweist, deren Saugseite mit dem Innenraum des ersten Entgasungsbehälters (5) fluidleitend verbunden ist und
- die Unterdruckerzeugungseinrichtung (3) eine zweite Vakuumpumpe aufweist, deren Saugseite mit dem Innenraum des zweiten Entgasungsbehälters (6) fluidleitend verbunden ist.

9. Entgasungseinrichtung nach Anspruch 8, **dadurch gekennzeichnet, dass** die Saugseite (3d) an einen Rohrstutzen angeschlossen ist, der sich in Richtung des Behälterbodens erstreckt.

10. Entgasungseinrichtung nach Anspruch 9, **dadurch gekennzeichnet, dass** unterhalb des Rohrstutzens ein zum Sammeln des entgasten Wassers eingerichteter Behältersumpf angeordnet ist.

11. Entgasungseinrichtung nach einem der Ansprüche 6 bis 10, **dadurch gekennzeichnet, dass** die Unterdruckerzeugungseinrichtung (3) zur Erzeugung eines Unterdrucks von unter 0,01 mbar absolut eingerichtet ist.

12. Entgasungseinrichtung nach einem der Ansprüche 6 bis 11, **dadurch gekennzeichnet, dass** die gasdichte, jedoch flüssigkeitsleitende Verbindung zwischen dem ersten Auslass (5e) und dem zweiten Einlass (6a) als Siphon (7) ausgestaltet ist.

13. Entgasungseinrichtung nach einem der Ansprüche 6 bis 12, **dadurch gekennzeichnet, dass** die ersten und/oder zweiten Behältereinbauten einen Flüssigkeitsverteiler (5b, 6b) aufweisen.

14. Entgasungseinrichtung nach einem der Ansprüche 6 bis 13, **dadurch gekennzeichnet, dass** die ersten und/oder zweiten Behältereinbauten eine strukturierte Packung (5c, 6c) aufweisen.

15. Entgasungseinrichtung nach einem der Ansprüche 6 bis 14, **dadurch gekennzeichnet,** der erste und zweite Entgasungsbehälter (5, 6) als Bestandteile einer zweistufigen Kolonne (2) ausgeführt sind, wobei der erste Entgasungsbehälter (5) oberhalb des zweiten Entgasungsbehälters (6) angeordnet ist.

16. Entgasungseinrichtung nach Anspruch 15, **dadurch gekennzeichnet, dass** der erste und der zweite Entgasungsbehälter (5, 6) der zweistufigen Kolonne (2) durch eine mindestens einen Durchgang umfassende Trennwand voneinander getrennt sind, der Durchgang eine in dem ersten Entgasungsbehälter (5) mündende Eintrittsöffnung und eine in dem zweiten Entgasungsbehälter (6) mündende Austrittsöffnung aufweist, die Eintrittsöffnung des Durchgangs zugleich den ersten Auslass und die Austrittsöffnung des Durchgangs zugleich den zweiten Einlass bilden, wobei der Durchmesser jedes Durchgangs derart dimensioniert ist, dass der Durchgang die gasdichte, jedoch flüssigkeitsleitende Verbindung zwischen dem ersten Auslass und dem zweiten Einlass bildet.

## Claims

1. A method for removing dissolved gases comprising oxygen and nitrogen from water in a degassing device (1) comprising
- a first and a second closed degassing container (5, 6) which each have first and second container installations to bring a liquid phase and a gaseous phase in contact and
- a negative-pressure generating device (3) which is adapted to generate variously high negative pressures in relation to the ambient pressure in the first and second degassing container (5, 6) wherein a suction side (3d) of the negative-pressure generating device below the second container installations in the second degassing container (6) but above the water level collecting at the bottom of the second degassing container is connected in a fluid-conducting manner to the interior of the degassing container (6),
comprising the steps:
- continuously introducing water into the first degassing container (5) at a water temperature T1 and a vapour pressure P1 given at the water temperature T1,
- passing the water through the first degassing container (5),
- generating a negative pressure in the first degassing container (5) above the given vapour pressure P1 in such a manner that at least the predominant portion of the dissolved oxygen is removed from the water,
- continuously removing the partially degassed water from the first degassing container (5),
- continuously introducing the removed and partially degassed water into the second degassing container (6) at a water temperature T2 and at a vapour pressure P2 given at the water temperature T2,
- passing the partially degassed water through the second degassing container (6),
- generating a negative pressure in the second degassing container (6) at the given vapour pressure P2 in such a manner that the water partially evaporates,
- passing the steam in direct flow with the water through the second degassing container (6),
- extracting the steam from the second degassing container (6) with the negative-pressure generating device (3),
- removing the degassed water from the second degassing container (6).

2. The method according to claim 1, **characterized in that** the negative pressure in the first degassing container (5) above the given vapour pressure P1 is generated in such a manner that at least 90 % of the dissolved oxygen is degassed from the water.

3. The method according to claim 1 or 2, **characterized in that** the negative pressure in the first degassing container (5) is a maximum of 1 mbar higher than the given vapour pressure P1.

4. The method according to one of claims 1 to 3, **characterized in that** the negative-pressure generating device (3) generates the negative pressure in an unregulated manner, wherein the negative-pressure generating device (3) is adapted to generate an absolute negative pressure below the negative pressure prevailing in the second degassing container (6).

5. The method according to one of claims 1 to 4, **characterized in that** the negative-pressure generating device (3) generates the negative pressure in an unregulated manner wherein the negative-pressure generating device (3) is adapted to generate an absolute negative pressure of less than 0.01 mbar.

6. A degassing device (1) for removing dissolved gases from water comprising
- a first closed degassing container (5) with first container installations adapted to bring a liquid phase and a gaseous phase in contact,
- a first inlet (5a) arranged above the container installations adapted for the continuous introduction of water into the first degassing container (5),
- a bottom-side first outlet (5e) adapted for continuous removal of the partially degassed water from the first degassing container (5),
- a second closed degassing container (6) with second container installations adapted to bring a liquid phase and a gaseous phase in contact,
- a second inlet (6a) arranged above the container installations adapted for continuous introduction of the partially degassed water into the second degassing container (6),
- a second outlet (6d) arranged underneath the container installations adapted for continuous removal of the partially degassed water from the second degassing container (6),
- a gastight but liquid-conducting connection between the first outlet (5e) and the second inlet (6a),
- a negative-pressure generating device (3) which is adapted to generate variously high negative pressures in relation to the ambient pressure in the first and second degassing container (5, 6) in such a manner that in the first degassing container (5) a negative pressure above the vapour pressure P1 of the introduced water can be generated and in the second degassing container a negative pressure below the vapour pressure P2 of the partially degassed water can be generated,
- wherein a suction side (3d) of the negative-pressure generating device below the second container installations in the second degassing container(6) but above the water level collecting at the bottom of the second degassing container is connected in a fluid-conducting manner to the interior of the degassing container (6).

7. The degassing device according to claim 6, **characterized in that** the negative-pressure generating device (3) comprises a vacuum pump (3a), the suction side (3d) of which is connected in a fluid-conducting manner to the interior of the first and second container (5, 6), wherein the fluid-conduction connection to the first degassing container (5) comprises a throttle (3b).

8. The degassing device according to claim 6, **characterized in that**
- the negative-pressure generating device (3) comprises a first vacuum pump, the suction side of which is connected in a fluid-conducting manner to the interior of the first degassing container (5) and
- the negative-pressure generating device (3) comprises a second vacuum pump, the suction side of which is connected in a fluid-conducting manner to the interior of the second degassing container (6).

9. The degassing device according to claim 8, **characterized in that** that the suction side (3d) is connected to a pipe connector which extends in the direction of the container base.

10. The degassing device according to claim 9, **characterized in that** a container sump adapted to collect the degassed water is arranged underneath the pipe connector.

11. The degassing device according to one of claims 6 to 10, **characterized in that** the negative-pressure generating device (3) is adapted to generate a negative pressure of less than 0.01 mbar absolute.

12. The degassing device according to one of claims 6 to 11, **characterized in that** the gastight but liquid-conducting connection between the first outlet (5e) and the second inlet (6a) is configured as a siphon (7) .

13. The degassing device according to one of claims 6 to 12, **characterized in that** the first and/or second container installations comprise a liquid distributor (5b, 6b).

14. The degassing device according to one of claims 6 to 13, **characterized in that** the first and/or second container installations comprise a structured packing (5c, 6c).

15. The degassing device according to one of claims 6 to 14, **characterized in that** the first and second degassing containers (5, 6) are implemented as components of a two-stage column (2), wherein the first degassing container (5) is arranged above the second degassing container (6).

16. The degassing device according to claim 15, **characterized in that** the first and the second degassing container (5, 6) of the two-stage column (2) are separated from one another by a dividing wall comprising at least one passage, the passage has an inlet opening which opens in the first degassing container (5) and an outlet opening which opens in the second degassing container (6), the inlet opening of the passage at the same time forms the first outlet and the outlet opening of the passage at the same time forms the second inlet, wherein the diameter of each passage is dimensioned in such a manner that the passage forms the gastight but liquid-conducting connection between the first outlet and the second inlet.

## Revendications

1. Procédé destiné à éliminer des gaz dissous, comprenant de l'oxygène et de l'azote hors d'une eau dans un système de dégazage (1) comprenant
- un premier et un deuxième réservoirs de dégazage (5, 6) fermés, qui comportent chacun des premiers et des deuxièmes éléments internes de réservoir pour mettre en contact une phase liquide et une phase gazeuse et
- un système générateur de dépression (3), qui est aménagé pour générer des dépressions de différents niveaux en rapport à la pression ambiante dans le premier et le deuxième réservoirs de dégazage (5, 6), en-dessous des deuxièmes éléments internes de réservoir dans le deuxième réservoir de dégazage (6), mais toutefois au-dessus du niveau d'eau qui s'accumule sur le fond inférieur du deuxième réservoir de dégazage, un côté aspiration (3d) du système générateur de dépression étant en liaison conductrice de liquide avec l'espace intérieur du réservoir de dégazage (6),
comprenant les étapes:
- introduire l'eau en continu dans le premier réservoir de dégazage (5) à une température de l'eau T1 et à une pression de vapeur P1 donnée à la température de l'eau T1,
- faire passer l'eau à travers le réservoir de dégazage (5),
- générer une dépression dans le premier réservoir de dégazage (5) au-delà de la pression de vapeur P1 donnée, de telle sorte qu'au moins la majeure partie de l'oxygène dissous se dégaze hors de l'eau,
- évacuer en continu l'eau partiellement dégazée du premier réservoir de dégazage (5),
- introduire en continu l'eau évacuée et partiellement dégazée dans le deuxième réservoir de dégazage (6) à une température de l'eau T2 et à une pression de vapeur P2 donnée à la température de l'eau T2,
- faire passer l'eau partiellement dégazée à travers le deuxième réservoir de dégazage (6),
- générer une dépression dans le deuxième réservoir de dégazage (6) en dessous de la pression de vapeur P2 donnée, de telle sorte que l'eau s'évapore partiellement,
- faire passer la vapeur en courant continu avec l'eau à travers le deuxième réservoir de dégazage (6),
- aspirer la vapeur hors du deuxième réservoir de dégazage (6) à l'aide du système générateur de dépression (3),
- évacuer l'eau dégazée hors du deuxième réservoir de dégazage (6).

2. Procédé selon la revendication 1, **caractérisé en ce que** la dépression dans le premier réservoir de dégazage (5) est générée au-delà de la pression de vapeur P1 donnée, de telle sorte qu'au moins 90 % de l'oxygène dissous se dégazent hors de l'eau.

3. Procédé selon la revendication 1 ou 2, **caractérisé en ce que** la dépression dans le premier réservoir de dégazage (5) est supérieure d'un maximum de 1 mbar à la pression de vapeur P1 donnée.

4. Procédé selon l'une quelconque des revendications 1 à 3, **caractérisé en ce que** le système générateur de dépression (3) génère la dépression de manière non réglée, le système générateur de dépression (3) étant aménagé pour générer une dépression absolue en-dessous de la dépression qui règne dans le deuxième réservoir de dégazage (6).

5. Procédé selon l'une quelconque des revendications 1 à 4, **caractérisé en ce que** le système générateur de dépression (3) génère la dépression de manière non réglée, le système générateur de dépression (3) étant aménagé pour générer une dépression absolue inférieure à 0,01 mbar.

6. Système de dégazage (1) destiné à éliminer des gaz dissous hors d'une eau, comprenant
- un premier réservoir de dégazage (5) fermé, comportant des premiers éléments internes de réservoir, aménagé pour mettre en contact une phase liquide et une phase gazeuse,
- une première entrée (5a), placée au-dessus des éléments internes de réservoir, aménagée pour introduire en continu l'eau dans le premier réservoir de dégazage (5),
- une première sortie (5e) du côté du fond inférieur, aménagée pour évacuer en continu l'eau partiellement dégazée du premier réservoir de dégazage (5)
- un deuxième réservoir de dégazage (6) fermé, comportant des deuxièmes éléments internes de réservoir, aménagé pour mettre en contact une phase liquide et une phase gazeuse,
- une deuxième entrée (6a), placée au-dessus des éléments internes de réservoir, aménagée pour introduire en continu l'eau partiellement dégazée dans le deuxième réservoir de dégazage (6),
- une deuxième sortie (6d), placée en-dessous des éléments internes de réservoir, aménagée pour évacuer en continu l'eau partiellement dégazée hors du deuxième réservoir de dégazage (6),
- une liaison étanche au gaz, mais toutefois conductrice de fluide entre la première sortie (5e) et la deuxième entrée (6a),
- un système générateur de dépression (3), qui pour générer différentes dépressions en rapport à la pression ambiante dans le premier et le deuxième réservoirs de dégazage (5, 6) est aménagé de telle sorte que dans le premier réservoir de dégazage (5) puisse être générée une dépression au-delà de la pression de vapeur P1 de l'eau introduite et dans le deuxième réservoir de dégazage puisse être générée une dépression inférieure à la pression de vapeur P2 de l'eau partiellement dégazée,
- en-dessous des deuxièmes éléments internes de réservoir dans le deuxième réservoir de dégazage (6), mais toutefois au-dessus du niveau d'eau qui s'accumule sur le fond inférieur du deuxième réservoir de dégazage, un côté aspiration (3d) du système générateur de dépression étant en liaison conductrice de fluide avec l'espace intérieur du réservoir de dégazage (6).

7. Système de dégazage selon la revendication 6, **caractérisé en ce que** le système générateur de dépression (3) comporte une pompe à vide (3a), dont le côté aspiration (3d) est relié de manière conductrice de fluide avec l'espace intérieur du premier et du deuxième réservoirs (5, 6), la liaison conductrice de fluide comportant en direction du premier réservoir de dégazage (5) un étrangleur (3b).

8. Système de dégazage selon la revendication 6, **caractérisé en ce que**
- le système générateur de dépression (3) comporte une pompe à vide, dont le côté aspiration est relié de manière conductrice de fluide avec l'espace intérieur du premier réservoir de dégazage (5) et
- le système générateur de dépression (3) comporte une deuxième pompe à vide, dont le côté aspiration est relié de manière conductrice de fluide avec l'espace intérieur du deuxième réservoir de dégazage (6).

9. Système de dégazage selon la revendication 8, **caractérisé en ce que** le côté aspiration (3d) est raccordé sur une tubulure qui s'étend dans la direction du fond inférieur du réservoir.

10. Système de dégazage selon la revendication 9, **caractérisé en ce que** sous la tubulure est placé une cuve de réservoir, destinée à collecter l'eau dégazée.

11. Système de dégazage selon l'une quelconque des revendications 6 à 10, **caractérisé en ce que** le système générateur de dépression (3) est aménagé pour générer une dépression absolue inférieure à 0,01 mbar.

12. Système de dégazage selon l'une quelconque des revendications 6 à 11, **caractérisé en ce que** la liaison conductrice de liquide, étanche au gaz est conçue entre la première sortie (5e) et la deuxième entrée (6a) sous la forme d'un siphon (7).

13. Système de dégazage selon l'une quelconque des revendications 6 à 12, **caractérisé en ce que** le premier et ou le deuxième éléments internes de réservoir comportent un distributeur de liquide (5b, 6b) .

14. Système de dégazage selon l'une quelconque des revendications 6 à 13, **caractérisé en ce que** le premier et/ou le deuxième éléments internes de réservoir comportent un paquet (5c, 6c) structuré.

15. Système de dégazage selon l'une quelconque des revendications 6 à 14, **caractérisé en ce que** le premier et le deuxième réservoirs de dégazage (5, 6) sont réalisés en tant qu'éléments d'une colonne (2) bi-étagée, le premier réservoir de dégazage (5) étant placé au-dessus du deuxième réservoir de dégazage (6).

16. Système de dégazage selon la revendication 15, **caractérisé en ce que** le premier et le deuxième réservoirs de dégazage (5, 6) de la colonne (2) bi-étagée sont séparés l'un de l'autre par une paroi de séparation comprenant au moins un passage, le passage comporte un orifice d'entrée débouchant dans le premier réservoir de dégazage (5) et un orifice de sortie débouchant dans le deuxième réservoir de dégazage (6), l'orifice d'entrée du passage forme simultanément la première sortie et l'orifice de sortie du passage forme simultanément la deuxième entrée, le diamètre de chaque passage étant dimensionné de sorte que le passage forme la liaison étanché au gaz, mais conductrice de liquide entre la première sortie et la deuxième entrée.
